Europäisches Patentamt

European Patent Office

Office européen des brevets

⑩

(11) Publication number: **0 251 101**
**B1**

# (12) EUROPEAN PATENT SPECIFICATION

(45) Date of publication of patent specification: **03.10.90**

(21) Application number: **87108905.8**

(22) Date of filing: **22.06.87**

(51) Int. Cl.⁵: **A 01 K 1/01**

(54) Urine pipe wiping apparatus for livestock building.

(30) Priority: **23.06.86 JP 144895/86**

(43) Date of publication of application:
**07.01.88 Bulletin 88/01**

(45) Publication of the grant of the patent:
**03.10.90 Bulletin 90/40**

(84) Designated Contracting States:
**BE DE FR GB NL**

(56) References cited:
**DE-A-2 608 810**
**DE-U-7 436 225**

(73) Proprietor: **KISHI ENGINEERING KABUSHIKI KAISHA**
**No. 224-2, Oaza Kanou**
**Okegawa-shi Saitama-ken (JP)**

(72) Inventor: **Kishi, Iwao**
**No. 8-6, 2-chome Nishi**
**Okegawa-shi Saitama-ken (JP)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**D-8000 München 22 (DE)**

Courier Press, Leamington Spa, England.

## Description

Detailed Explanation of the Invention

This invention relates to a urine pipe wiping apparatus for a livestock building for pushing such a mixture liquid comprising mainly urine and partially droppings that is flown into a urine pipe provided on a bottom of a waste pit provided below a row of livestock crates in a livestock building in order to discharge the same forcibly to the outside of the building. The invention relates also to the use of such an apparatus within a livestock building.

Prior Art

A construction of the interior of a livestock building such as a swine building for hogs, nursery pigs, farrowing pigs or the like or a cattle building for cows, cattles or the like is shown in Fig. 14, for instance. This is typically adaptable for a swine building. Namely, this is so constructed that there are installed on the floor surface of a livestock building at least one row of a large number of swine crates A, A, . . . disposed one adjacent one with another, each being surrounded by fences a, a, . . ., and along the row of crates there is provided on a working sideway B, and a long waste gutter or pit C common to all the swine crates A, A, . . . is made in the floor so as to extend throughout the whole length of the row of swine crates and cross respective parts of the floors of the crates as shown in Fig. 15, and a row of grill or grid members D, D, . . . are provided so as to cover the top surfaces of pit portions of the respective swine crates, and the bottom surface of the long pit C is so formed that both side surfaces of the center line thereof are formed into slant surfaces which are gradually lowered toward the center line, and a long urine pipe E of which an upper surface is made into a slit opening e is provided along on the center line and is embedded herein in such a slightly inclinded condition and a lower end portion thereof is situated over a discharging passage not shown. Accordingly, wastes comprising droppings and urine from the respective swine crates are dropped on the bottom surface of the pit C through the respective grids D, D . . ., and the droppings are accumulated on both side slant surfaces of the bottom, and the urine is flown into the urine pipe E through the upper slit e thereof, and the urine contained in the urine pipe E is automatically flown due to its inclination to be discharged to the outside through the discharging passage. The accumulated droppings are scraped off outside by a scraper at a proper time. In general, the urine pipe E is about 10cm in diameter, and several ten meters long, and it is of course that it is long according to the length of the row of the livestock crates to be provided.

Thus, in the case of the removal treatment of the wastes of this kind, it is desirable from the point of view of the subsequent utilization of them that the droppings and urine thereof are separated from each other as much as possible and only the urine is discharged from the urine pipe, but it is actually in a general practice that some of the droppings is joined in the urine, so that a mixture liquid thereof is resulted and is flown into the urine pipe. Consequently, this mixture liquid is poor in fluidity, and there is resulted a difficulty in being automatically or spontaneously discharged. Hitherto, it has been carried out that the installed inclination degree of the urine pipe is made larger in order to accelerate the discharge of the mixture liquid, but it is inconvenient in that not only costs for the foundation or grounding work for the building become vast, but also the discharging efficiency cannot be obtained remarkably. In addition, it is not avoidable that the discharge of the mixture liquid is not sufficient and consequently putrefied odor thereof is strong and there is formed an unsanitary environmental atmosphere, which becomes the cause of diesease of the livestock such as swine or the like. In order to forcibly discharge the mixture liquid thereof flown into the urine pipe, it is in principally that the mixture liquid has to be pushed to be flown out by any mechanical means, but in this case, it is unavoidable that a comparatively large amount of the mixture liquid is flooded sideways outside the urine pipe through the top slit thereof at the time of the sweeping operation by the mechanical means, and as a result thereof a flown amount thereof in the longitudinal direction of the urine pipe is very small and thus the discharging or removing efficiency is very low.

Hitherto, there has been used, instead of the urine pipe having the long slit e at the top part thereof in the longitudinal direction, as shown in Fig. 16A, such a type of urine pipe that, as shown in Fig. 16B, the top wall of the pipe body thereof is provided with a large number of spaced openings f, f, . . . so made therethrough as to be disposed in the longitudinal direction.

With the urine pipe of this type, an amount of the droppings which are mixed in the urine becomes smaller than the foregoing slit type urine pipe E, but it is still unavoidable that some of the droppings and the urine are mixed to result in a mixture liquid, which is flown into the urine pipe, so that the mixture liquid is very bad in fluidity and the spontaneous discharge thereof is difficult. In this case also, any compulsory discharge operation has to be carried out, but it is unavoidable to overflow the mixture liquid through the large number of the openings f, f, . . . outside the urine pipe, and thus a good efficient discharging or removing operation cannot be performed.

The inventor of this application, in view of the urine pipe sweeping problems as explained above, and as a result of various researches and studies, the following invention has been made.

Namely, the gist of this invention is that the top part of a urine pipe is arranged to be opened and closed as desired and in a closed condition thereof a mixture liquid contained in the urine pipe is swept by a wiper for pushing a whole sectional area of the interior of the urine pipe and in an opened condition thereof flowing of the mixture liquid into the urine pipe is permitted, and, on the other hand, the wiper is constructed into such a piston valve type one that at the time of its running forwards in the direction sweeping a mixture liquid the same pushes the liquid so as to cover the whole sectional area of the closed pipe to result in a good removal of the mixture liquid, and at the time of its running rearwards in the reverse direction the same does not push back the mixture liquid to result in a smooth and rapid returning.

Namely, a purpose of this invention is to provide a urine pipe wiping apparatus free from the foregoing conventional defects and making it possible to remove a mixture liquid of wastes from the interior of a urine pipe smoothly and with a good and high efficiency, and, according to this invention, it is characterized in that it comprises a combination of a urine pipe and a wiper which is slidably movable forward and rearwards along on the inner surface of the urine pipe in its longitudinal direction, and the urine pipe is so constructed that a part of a pipe body wall thereof is formed into a mounting member panel which is provided with a large number of perforation holes disposed in its longitudinal direction so as to leave predetermined equal intervals therebetween and is additionally provided with a longitudinal slit made through the whole length of the interior thereof in its longitudinal direction so that a slide panel provided with a large number of openings disposed in its longitudinal direction as to leave the same intervals therebetween as those left between the foregoing large number of holes may be slidably inserted into the slit of the mounting member panel and thereby those holes of the mounting member panel may be closed and opened by the slidable movement of the slide panel, and the wiper comprises a center shaft which is movable forwards and rearwards in the longitudinal direction of the foregoing pipe, an annular member which is positioned so as to surround the center shaft so that there may be defined inside the same a liquid passing hollow opening about the center shaft, a front frame body which supports a front surface of the annular member and is slidably movable along on the center shaft and allows a liquid to pass therethrough, a rear frame body which supports a rear surface of the annular member and is slidably movable along on the center shaft and allows a liquid to pass therethrough, and a valve plate which is fixed to the center shaft within a space formed between the annular member and the rear frame body so that the valve plate is movable forwards and rearwards in conjuction with the forward and rearward reciprocation of the center shaft for closing and opening the inside hollow opening of the annular member.

One embodying example of this invention will now be explained with reference to the accompanying drawings as follows:

General Explanation of the Drawings:

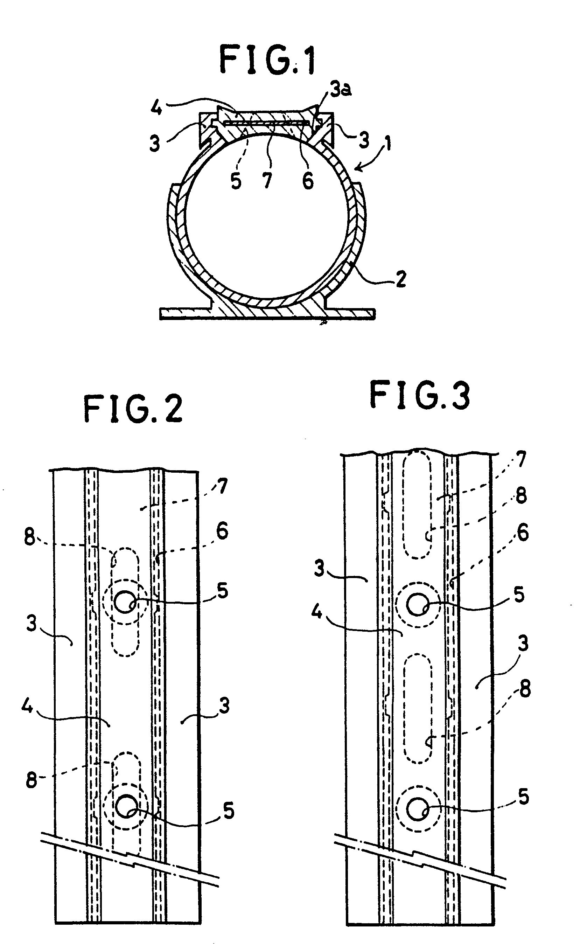

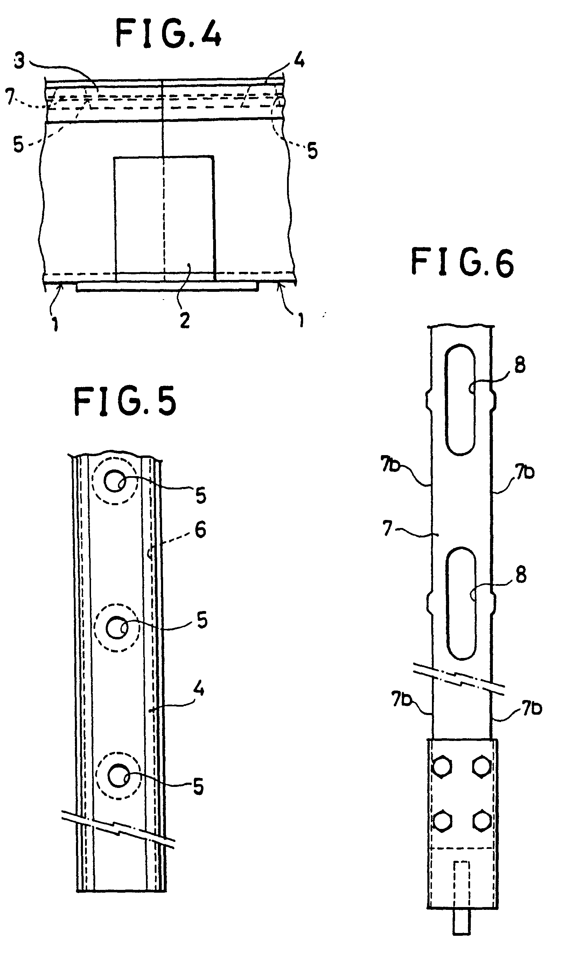

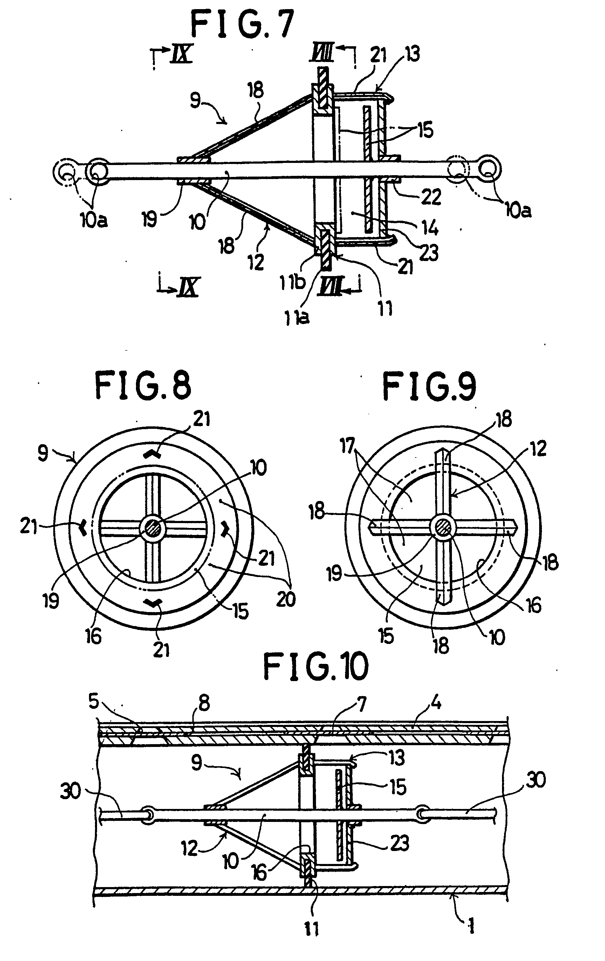

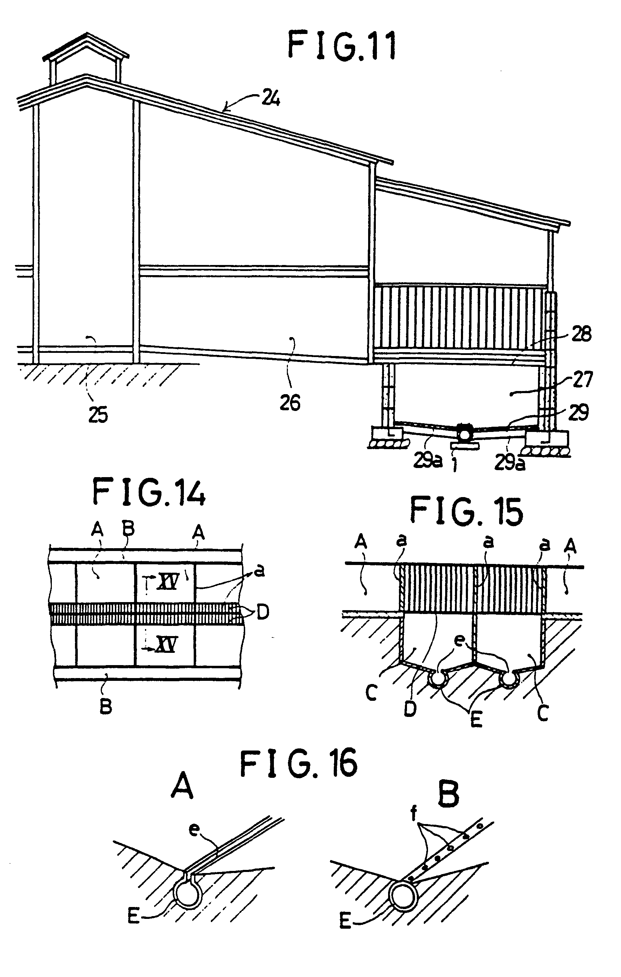

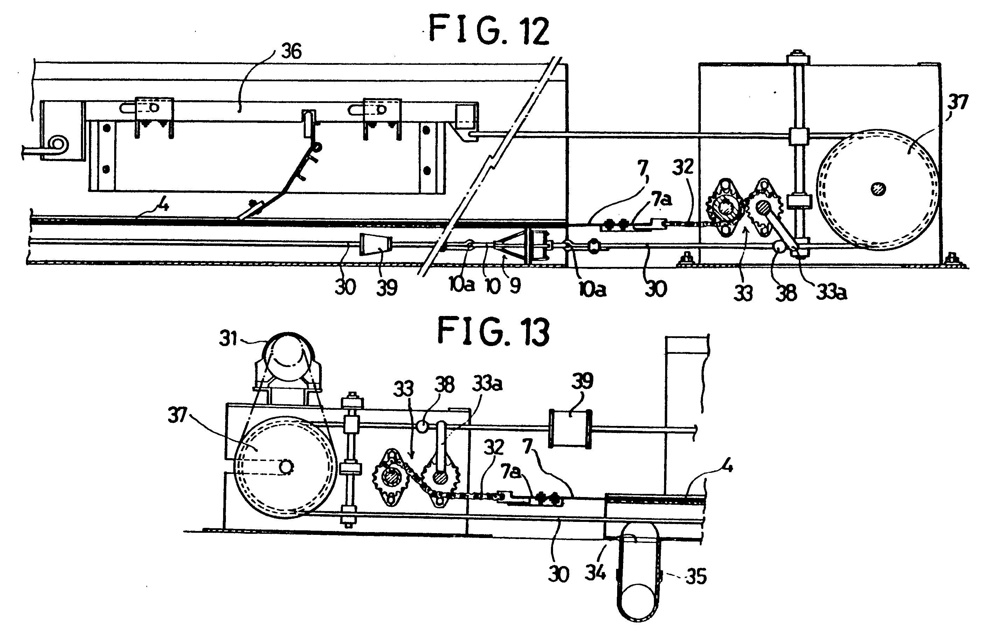

Fig. 1 is a sectional view of one example of a urine pipe of this invention, Fig. 2 is a top plan view of the urine pipe, partly omitted, in its opened condition, Fig. 3 is a top plan view of the urine pipe, partly omitted, in its closed condition, Fig. 4 is a side view of a part of the urine pipe, Fig. 5 is a top plan view of a mounting member panel, partly omitted, Fig. 6 is a top plan view of a slide panel, partly omitted, Fig. 7 is a sectional side view of a wiper of the apparatus, Fig. 8 is a sectional view taken along the line VIII—VIII in Fig. 7, Fig. 9 is a sectional view taken along the line IX—IX in Fig. 7, Fig. 10 is a sectional view of one embodying example of this invention apparatus, Fig. 11 is a side view, partly omitted, of a swine building provided with this invention apparatus, Fig. 12 is a sectional side view of one end section thereof, Fig. 13 is a sectional side view of the other end section thereof, Fig. 14 is a top plan view of part of a conventional construction of a conventional swine building, Fig. 15 is a sectional view taken along the line XV—XV in Fig. 14, and Fig. 16A and Fig. 16B are sectional perspective views of urine pipe thereof.

Figs. 1—10 show one embodying example of this invention urine pipe wiping appartus. Referring to those Figures, numeral 1 denotes a urine pipe. The urine pipe 1 is composed plural circular pipe members which are jointed together in a single pipe 1 in such a manner that adjacent ones thereof are connected together by applying a joint member 2 to the outer peripheral surfaces of abutted parts thereof and by interposing an adhesive agent between the joint member 2 and the abutted parts thereof, to have a predetermined length thereof in compliance with a predetermined length of a swine building, for instance. According to this invention a top portion of the pipe body of the urine pipe 1 is provided with a top opening 3a extending throughout the whole length of the pipe 1, and guide frames 3, 3 are formed on both sides of the opening 3a, and a mounting member panel 4 having a proper thickness so formed as described below is mounted or inserted in the guide groove frames 3, 3. The mounting member panel 4 is made to have the same length as the urine pipe 1, and the full length thereof may be composed of a single panel or plural panel members of a proper length connected together into a single panel. The mounting member panel 4 as clearly shown in Fig. 5, is provided with a large number of vertically perforated holes 5, 5, . . . in the form of a circle or the like disposed to leave predetermined equal intervals therebetween in the longitudinal direction thereof and, in addition, is provided with a horizontal slit 6 made through at the center in its thickness direction and throughout the whole length thereof. Each of the perforation holes 5 is formed into such a funnel-shape one that the diameter thereof is gradually increased towards the lower end surface thereof, and thereby there can be obtained such a preferable result that inflowing of a mixture of wastes comprising mainly urine and partially the droppings therethrough into the urine pipe 1 is facilitated.

A slide panel 7 prepared separately from the pipe constituent members mentioned above is inserted into the slit 6 of the foregoing mounting member panel 4 of the pipe body. The slide panel 7 is made so that the length thereof may become somewhat longer than that of the pipe body, and at least one of the protruded external end parts 7a and 7a is to be connected to a reciporocating driving source situated outside. The slid plate 7 provided with a large number of openings 8, 8, ..., preferably, long openings as illustrated, made therethrough and in the longitudinal direction thereof so as to leave predetermined equal intervals therebetween. The number of the openings 8, 8, . . . are the same as that of the perforation holes 5, 5, . . . and each interval between the centers of the adjacent openings 5, 5 is the same as each interval between those of the adjacent holes 8, 8. It is in general that the slide panel 7 is composed of a member, but it may be composed of plural ones welding together, for instance. Thus, the slide panel 7 is slidably movable along the mounting member panel 4, so that the urine pipe 1 of this invention is so operated that there may be brought about an open condition in which all the holes 8, 8, . . . of the slide panel 7 and all the through openings 5, 5 . . . of the mounting member panel 4 are in alignment with each other as shown in Fig. 2 and a closed condition in which those holes 8, 8, . . . are those through openings 5, 5, . . . are in nonalignment with each other as shown in Fig. 3. Both side edges of the slide panel 7 may be straight line ones, but it is preferable to form them into uneven ones having recessed side edge parts 7b and 7b, so that the resistance to sliding of the slide panel 7 along the mounting member panel 4 can be decreased. Further more in detail, the urine pipe 1 is made of any kind of material having an anticorrosion property such as of stainless steel, hard synthetic resin such a polyvinyl chloride or the like, and, for instance, the inner diameter thereof is 100 mm, the length thereof is 100 m, and distance between the centers of the adjacent holes 5, 5, made in the mounting member panel 4 is set to be 150 mm. The slide panel 7 is made of similar material such as stainless steel, polyvinyl chloride or the like, and the width thereof is 50 mm, the thickness thereof is 1.5 mm and the length thereof is 101 m.

According to this invention, a urine pipe wiping apparatus is constructed by assembling the urine pipe 1 constructed as above, with a wiper 9 having the following construction in such a manner that the wiper 9 is slidably mounted as shown in Fig. 10, in order to be used for removing the mixture liquid in the urine pipe 1 installed in the livestock building. The wiper 9 is composed of a center shaft 10 of which both end portions have connecting holes 10a and 10a for being tied with strings such as cables, wires, ropes or the like, an annular member 11 which is positioned concentrically with the center shaft 10 to surround the same and is arranged to be slidable along the inner peripheral surface of the urine pipe 1, a front frame body 12 which supports the front surface of the annular member 11, and is slidable along on the center shaft 10 and permits a liquid to flow therethrough, a rear frame body 13 which supports the rear surface of the annular member 11, and is slidable along on the center shaft 10 and permits a liquid to flow therethrough, and a valve plate 15 fixed to the center shaft 10 within a space 14 formed between the annular member 11 and the rear frame body 13 so that the plate 15 may be moved forwards an rearwards in conjuction with reciprocal movement of the center shaft 10 to close and open an inside hollow opening 16 of the annular member 11. The annular member 11 is composed of a circular annular gasket 11a made of any material having a good close contact property with the inner peripheral surface of the circular urine pipe 1 and a durability or toughness and a circular annular clamping member 11b which is made of any anticorrosion material such as stainless steel, hard synthetic resin or the like and is formed into a U-shaped one, for instance, for holding firmly the annular gasket 11a by clamping from both sides thereof by means of clamping, or by an adhesive agent or the like. The front frame body 12 is composed of at least two arm bars 18, four arm bars in the illustrated example, which are disposed circularly about the center shaft 10 so as to leave such each space 17 between mutually adjacent ones that allow a liquid to flow therethrough, and the rearward ends of the arm bars 18 are fixed to the front surface of the annular member 11, and the forward ends thereof are connected to a slidable tube 19 slidably mounted on the center shaft 10. The rear frame body 13 is composed of at least two arm bars 21, four arm bars in the illustrated example, which are disposed circularly about the center shaft 10 so as to leave such each space 20 between mutually adjacent ones that allow a liquid to flow therethrough, and so as to extend from the rear surface of the annular member 11 rearwards, and a back plate 23 which are connected at its outer periphery to the rearward ends of these rear arm bars 21 and is slidably mounted on the center shaft 10 through a slidable tube 22 provided on its inner periphery. The valve plate 15 is in the form of a circular disk which is larger in diameter than the inside hollow opening 16 of the annular member 11 so that the same may be brought into its close contact with the rear surface of the annular member 11 in the course of its forward movement as shown by chain lines in Fig. 7 and in its rearward movement the same may be brought into contact with the front surface of the back plate 23 for being prevented from its further rearward movement and thus the same may be given a reciprocating or piston movement. The clamping member 11b of the annular member 11, the front arm bars 18, the rear arm bars 21, the valve plate 15, and the back plate 23 are made of any corrosion resisting material such as a stainless steel, hard synthetic resin. In the illustrated examples, they are all made of metallic material and respective abutted portions thereof and jointed together by welding. The front arm bars 18 and the slidable tube 19 and the rear arm bars 21 and the slidable tube 22 are adhered together with an adhesive agent. The slidable tube 19 and 22 are made of any durable anti-frictional material such as rubber, synthetic resin or the like.

The urine pipe 1 and the wiper 9 thus constructed are assembled together as shown in Fig. 10 into a urine pipe wiping apparatus of this invention, which is adaptable for a livestock building.

Figs. 11—13 show one example where the above apparatus is adapted to a swine building. Referring to the those Figures, numeral 24 denotes a swine building, and there is provided at the center line of the floor of the same a working sideway 25, and on both sides of the sideway 25 there are provided two rows of swine crates 26, 26, . . ., each row thereof being disposed in a line in the longitudinal direction, namely, in the direction perpendicularly to the surface of the drawing sheet. Numeral 27 denotes a gutter or pit common to each row of swine crates 26, 26, . . ., numeral 28, 28, . . . denote a row of grids provided above the pit 27 at the respective swine crates 26, 26, . . . in each row so as to form parts of the respective floors of the swine crates, and numeral 29 denotes a bottom of the pit 27 for wastes. The bottom 29 is formed into slant surfaces 29a and 29a declined gradually towards the center line thereof, and at the resultant lowest center line portion thereof there is installed the foregoing urine pipe 1 of this invention in such a manner that the same may be slightly inclined from one end thereof towards the other end thereof, and the wiper 9 of this invention is inserted into the urine pipe 1 in such a manner that the outer periphery of the annular member 11 thereof may be slidably along on the inner peripheral surface of the urine pipe 1, and ropes 30, 30 are attached, at their one ends, to the connecting holes 10a and 10a made in both the end portions of the center shaft 10, and the other ends of the ropes 30, 30 are connected to a driving apparatus having a reversible motor. Both end portions of the slide panel 7 slidably inserted in the horizontal slit 6 of the mounting member panel 4 which constitutes the top portion of the urine pipe 1 are protruded outwards from both ends of the urine pipe 1, and the resultant external end portions 7a and 7a thereof are connected through chains or sprockets 32, 32 to the reciprocating pulling means 33, 33. A discharging outlet 34 made through the lower end portion of the urine pipe 1 is situated to be open to the upper open surface of a discharging channel 35 situated therebelow and at its right angle therewith. In the drawings, there is provided a scraper denoted by numeral 36, and the same 36 is for scraping accumulated droppings on both the slant side surfaces 29a and 29a of the bottom 29 of the pit 27, and is connected to both ends of the ropes 30, 30 applied to drums 37, 37 provided on both terminal end sides of the foregoing pulling means 33, 33 so as to be reciprocatable right and left by the respective pulling operations of the pulling means 33, 33. The respective pulling means 33, 33 are provided with engaging arms 33a and 33a which are to be brought into engagement with engaging balls 38, 38 and be inclined by being brought into engagement with engaging balls 38, 38 fixed to respective predetermined portions of the reciprocating ropes 30 so that the slide panel 7 may be moved forwards and rearwards by a predetermined distance by the respective inclinations of the engaging arms 33a and 33a and consequently the closing and opening of all the holes 5, 5, . . . of the urine pipe 1 can be carried out. Numeral 39, 39 denote limit switches for the motor 31.

Next, the operation of the foregoing urine pipe wiping apparatus will be explained as follows:

In the above apparatus, the urine pipe 1 is kept in such an opened condition that the respective openings 8, 8, . . . of the slide panel 7 are brought in alignment with the respective holes 5, 5, . . . of the mounting member panel 4 of the urine pipe body thereof, and consequently urine among the wastes comprising the droppings and urine dropped from the swine crates onto the slant surfaces 29a and 29a of the bottom 29 of the pit 27 is flown together with some of the droppings waste into the urine pipe 1 and the resultant mixture liquid retained in the urine pipe 1 is automatically or spontaneously flown downwards to be discharged into the discharging channel 35 owing to the slight inclination of the urine pipe 1, and when it becomes necessary to carry out a compulsory or forcible removal of the mixture liquid in the urine pipe 1, the slide panel 7 is slidably moved so that the respective oepnings 8, 8, . . . thereof may be brought into non-alignment with the respective holes 5, 5, . . . of the mounting member panel 4 to close the top surface of the urine pipe 1. Thus, under this closed condition thereof, the wiper 9 is moved forwards towards the outlet opening 34 of the lower end portion of the urine pipe 1 by pulling the center shaft 10 thereof through the rope 30 connected to one end portion of the center shaft 10, so that the valve plate 15 on the center shaft 10 is moved forwards to be brought into abutment with the annular member 11 to close the inside hollow opening 16 thereof, and thus the mixture liquid can be wiped or swept by the wiper 9 closing the whole sectional area surrounding the inner peripheral surface of the urine pipe 1, without leaking or leaving the mixture liquid behind the wiper 9. After completion of the removal of the mixture liquid, the wiper 9 is pulled rearwards by the rope 30 connected to the other end portion of the center shaft 10 so as to be moved back to the original starting position and in conjunction with the rearward pulling action, the valve plate 15 is also pulled rearwards to leave the annular member 11 and open the inside hollow opening 16 and is brought into abutment with the back plate 15, so that even if the slide panel 7 is slidably moved to open the respective holes 5, 5, . . . of the mounting member panel 4 and consequently the mixture liquid is flown into the urine pipe 1 during the rearward movement of the wiper 9, the mixture liquid retained in the urine pipe 1 can be passed through the rearward spaces 20, the inside hollow opening 16 of the annular member 11 and the forward spaces 17 of the rearward moving wiper 9 in order and accordingly the wiper 9 can be moved back smoothly and rapidly, without receiving the resistance of the retained in the urine pipe 1, to the original position. In addition, under the condition that the top surface of the urine pipe is closed by the slide panel 7, the mixture liquid never be forced to be overflown to the outside of the top surface of the urine pipe 1 during compulsory removing, that is, sweeping operation of the wiper 9, and thus a high efficient removal of the mixture liquid can be achieved by this invention appartus, and the foregoing conventional defects can be removed.

**Claims**

1. A urine pipe wiping apparatus for a livestock building characterized in that it comprises a combination of a urine pipe (1) and a wiper (9) which is slidably movable forwards and rearwards along on the inner surface of the urine pipe (1) in its longitudinal direction, and the urine pipe (1) is so constructed that a part of a pipe body wall thereof is formed into a mounting member panel (4) which is provided with a large number of perforation holes (5) disposed in its longitudinal direction so as to leave predetermined equal intervals therebetween and is additionally provided with a longitudinal slit (6) made through the whole length of the interior thereof in its longitudinal direction so that a slide panel (7) provided with a large number of openings (8) disposed in its longitudinal direction as to leave the same intervals therebetween as those left between the foregoing large number of holes (8) may be slidably inserted into the slit (6) of the mounting member panel (4) and thereby those holes (5) of the mounting member panel (4) may be closed and opened by the slidable movement of the slide panel (7) and the wiper (9) comprises a center shaft (10) which is movable forwards and rearwards in the longitudinal direction of the foregoing pipe (1), an annular member (11) which is positioned so as to surround the center shaft (10) so that there may be defined inside the same a liquid passing hollow opening about the center shaft (10), a front frame body (12) which supports a front surface of the annular member (11) and is slidably movable along on the center shaft (10) and allows a liquid to pass therethrough, a rear frame body (13) which supports a rear surface of the annular member (11) and is slidably movable along on the center shaft (10) and allows a liquid to pass therethrough, and a valve plate (15) which is fixed to the center shaft (10) within a space formed between the annular member (11) and the rear frame body (13) so that the valve plate (15) is movable forwards and rearwards in conjuction with the forward and rearward reciprocation of the center shaft (10) for closing and opening the inside hollow opening of the annular member (11).

2. An apparatus as claimed in claim 1, wherein the mounting member panel (4) comprises a flat mounting member which is adaptable to be mounted into guide grooves (3) formed on both sides of an outwardly opening slit made in a part of the pipe body wall, and the perforation holes (5) each is so funnel-shaped as to be made gradually larger in diameter toward the inner end thereof.

3. A urine pipe wiper apparatus as claimed in claim 1, wherein the urine pipe (1) at least one in number, and in the case where the urine pipe (1) comprises plural ones, the adjacent pipes (1) are joined together through a joint member in such a manner that the joint members (19, 21, 22) are applied through an adhesive agent to the outer surfaces of abutted end portions thereof.

4. An apparatus as claimed in claim 1, wherein the annular member of the wiper (9) is composed of a circular doughnut-shaped gasket (11a) and a sectionally U-shaped circular annular clamping member (11b).

5. An apparatus as claimed in claim 1, wherein the front frame body (12) is composed of at least two front arm bars (18) disposed circularly so as to leave each liquid passing space (17) therebetween about the center shaft (10), and rearward ends of those arm bars (18) are connected to the front surface of the annular member (11), and forward ends thereof are connected to a slidable tube (19) slidably mounted on the center shaft (10).

6. An apparatus as claimed in claim 1, wherein the rear frame body (13) is composed of at least two rear arm bars (21) disposed so circularly as to leave each liquid passing space (20) therebetween about the center shaft (10), and a back plate (23) which connects at its outer periphery to rearward ends of those rear arm bars (21) and is slidably mounted on the center shaft (10) through a slidable tube (22) fixed to the inner periphery thereof.

7. An apparatus as claimed in claim 1, wherein the valve plate (15) is slidably movable forwards and rearwards within a space formed between the annular member (11) and the back plate (23).

8. An apparatus as claimed in claim 1, wherein the slide plate (7) has a connecting end portion (7a) which is protruded from at least one end of the urine pipe (1) for being connected to a reciprocating driving source situated outside.

9. An apparatus as claimed in claim 1, wherein both ends of the center shaft (10) of the wiper (9) are connecting ends for connecting pulling strings such as wire, cable rope (30) or the like of which outer ends are connected to a reciprocating driving source (33) situated outside.

10. The use of an apparatus according to any of the preceding claims within a livestock building wherein the foregoing pipe (1) is installed at the center line of a bottom surface of a waste pit (27) provided below a row of livestock crates (26) within a livestock building (24) in such a condition that the same is in a slightly inclined condition and a lower end portion thereof is situated at a discharging conduit extended to the outside of the building (24), and the connecting end portion of the slide panel (7) is connected to the reciprocating driving source (33), and the wiper (9) is mounted in the urine pipe (1) in such a condition that the outer periphery thereof is in its close contact with the inner surface of the urine pipe (1), and both ends of the center shaft (10) are connected through the pulling strings (30) to the reciprocating driving source (33) situated outside.

**Patentansprüche**

1. Urinrohrwischvorrichtung für ein Gebäude für Vieh, dadurch gekennzeichnet, daß sie eine Kombination aus einem Urinrohr (1) und einem längs der Innenfläche des Urinrohres (1) in dessen Längsrichtung vor- und zurückschiebbaren Wischer (9) aufweist, und daß das Urinrohr (1) so konstruiert ist, daß ein Teil seiner Rohrkörperwand in eine Befestigungsteilplatte (4) geformt ist, die mit einer großen Zahl von in ihrer Längsrichtung derart angeordneten Perforationslöchern (5) versehen ist, daß zwischen ihnen vorbestimmte gleiche Intervalle belassen sind, und die zusätzlich mit einem in ihrer Längsrichtung durch die ganze Länge ihres Inneren gehenden und derart ausgebildeten Längsschlitz (6) versehen ist, daß eine Schiebeplatte (7), die mit einer großen Zahl von in ihrer Längsrichtung angeordneten Öffnungen (8) so versehen ist, daß zwischen ihnen die gleichen Intervalle belassen sind, wie bei der großen Zahl Löcher (5), verschiebbar in den Schlitz (6) der Befestigungsteilplatte (4) einsetzbar ist, wobei die Löcher (5) der Befestigungsteilplatte (4) durch die Schiebebewegung der Schiebeplatte (7) geschlossen und geöffnet werden können, und daß der Wischer (9) einen in Längsrichtung des Rohres (1) vorwärts und rückwärts bewegbaren zentralen Schaft (10), ein den zentralen Schaft (10) derart umgebendes ringförmiges Teil (11), daß auf dessen Innenseite eine hohle Flüssigkeitsdurchlaßöffnung um den zentralen Schaft (10) festlegbar ist, einen vorderen Rahmenkörper (12), der eine vordere Fläche des ringförmigen Teils (11) hält, längs des zentralen Schaftes (10) verschiebbar ist und eine Flüssigkeit hindurchgehen läßt, einen hinteren Rahmenkörper (13), der eine hintere Fläche des ringförmigen Teils (11) hält, längs des zentralen Schaftes (10) verschiebbar ist und eine Flüssigkeit hindurchgehen läßt, und eine Ventilplatte (15) aufweist, die an dem zentralen Schaft (10) innerhalb eines zwischen dem ringförmigen Teil (11) und dem hinteren Rahmenkörper (13) derart ausgebildeten Raumes befestigt ist, daß die Ventilplatte (15) zum Schließen und Öffnen der innenseitigen hohlen Öffnung des ringförmigen Teils (11) in Verbindung mit der hin- und hergehenden Vorwärts- und Rückwärtsbewegung des zentralen Schaftes (10) vorwärts und rückwärts bewegbar ist.

2. Vorrichtung nach Anspruch 1, wobei die Befestigungsteilplatte (4) ein flaches Befestigungsteil aufweist, das derart ausgebildet ist, daß es in auf beiden Seiten eines in einem Teil der Rohrkörperwand ausgebildeten, nach auswärts sich öffnenden Schlitzes ausgebildeten Führungsnuten zu befestigen ist, und wobei jedes der Perforationslöcher (5) derart trichterförmig ist, daß es in Richtung seines inneren Endes im Durchmesser graduell größer gemacht ist.

3. Vorrichtung nach Anspruch 1, wobei wenigstens ein Urinrohr (1) vorgesehen ist, und wobei in dem Fall, daß mehrere Urinrohre (1) vorhanden sind, die benachbarten Rohre (1) durch ein Verbindungsglied derart miteinander verbunden sind, daß die Verbindungsglieder (19, 21, 22) durch ein Haftmittel an den Außenflächen aneinanderstoßender Endabschnitte der Rohre angebracht sind.

4. Vorrichtung nach Anspruch 1, wobei das ringförmige Teil des Wischers (9) aus einem wulstringförmigen Dichtungsring (11a) und einem im Querschnitt U-förmigen ringförmigen Klemmteil (11b) zusammengesetzt ist.

5. Vorrichtung nach Anspruch 1, wobei der vordere Rahmenkörper (12) aus wenigstens zwei vorderen Armstangen (18) gebildet ist, die derart auf einem Kreis angeordnet sind, daß sie dazwischen jeden Flüssigkeitsdurchlaßraum (17) um den zentralen Schaft (10) belassen, wobei rückwärtige Enden dieser Armstangen (18) mit der vorderen Fläche des ringförmigen Teils (11) verbunden sind, und wobei vordere Enden dieser Arme mit einem verschiebbaren Rohr (19) verbunden sind, das verschiebbar auf dem zentralen Schaft (10) behalten ist.

6. Vorrichtung nach Anspruch 1, wobei der hintere Rahmenkörper (13) aus wenigstens zwei hinteren Armstangen (21), die derart auf einem Kreis angeordnet sind, daß sie dazwischen jeden Flüssigkeitsdurchlaßraum (20) um den zentralen Schaft (10) belassen, und aus einer hinteren Platte (23) zusammengesetzt ist, die an ihrem äußeren Umfang mit rückwärtigen Enden dieser hinteren Armstangen (21) verbunden und durch ein an ihrem inneren Umfang befestigtes verschiebbares Rohr (22) verschiebbar auf dem zentralen Schaft (10) gehalten ist.

7. Vorrichtung nach Anspruch 1, wobei die Ventilplatte (15) in dem zwischen dem ringförmigen Teil (11) und der hinteren Platte (23) ausgebildeten Raum vorwärts und rückwärts verschiebbar ist.

8. Vorrichtung nach Anspruch 1, wobei die Schiebeplatte (7) einen Verbindungsendabschnitt (7a) aufweist, der von wenigstens einem Ende des Urinrohres (1) hervorsteht, um mit einer außen befindlichen, sich hin- und herbewegenden Antriebsquelle verbunden zu werden.

9. Vorrichtung nach Anspruch 1, wobei beide Enden des zentralen Schaftes (10) des Wischers (9) Anschlußenden zum Anschliessen je eines langgestreckten Zugelements (30), insbesondere Draht, Seil, Tau oder dergleichen, dessen äußeres Ende mit einer außen befindlichen, sich hin- und herbewegenden Antriebsquelle (33) verbunden ist, sind.

10. Anwendung einer Vorrichtung nach einem der vorhergehenden Ansprüche in einem Gebäude für Vieh, wobei das Urinrohr (1) an der Mittellinie einer Bodenfläche einer unterhalb einer Reihe von Viehverschlägen (26) innerhalb eines Gebäudes (24) derart vorgesehenen Ablaufsenke (27) installiert ist, daß diese in einem leicht geneigten Zustand ist und sich ein unterer Endabschnitt der Ablaufsenke an einer zur Außenseite des Gebäudes (24) sich erstreckenden Ablaufleitung befindet, wobei der Verbindungsendabschnitt der Schiebeplatte (7) mit der sich hin- und herbewegenden Antriebsquelle (33) verbunden ist, wobei der Wischer (9) in dem Urinrohr (1) derart angeordnet ist, daß sein äußerer Umfang in dichtem Kontakt mit der Innenfläche des Urinrohres (1) ist, und wobei beide Enden des zentralen Schaftes (10) durch langgestreckte Zugelemente (30) mit der außen befindlichen, sich hin- und herbewegenden Antriebsquelle (33) verbunden sind.

**Revendications**

1. Appareil pour essuyer un tube d'urine pour des étables, caractérisé en ce qu'il comprend la combinaison d'un tube d'urine (1) et d'un organe d'essuyage (9) qui peut coulisser vers l'avant et vers l'arrière le long de la surface intérieure du tube d'urine (1) dans sa direction longitudinale, en ce que le tube d'urine (1) est conçu de manière qu'une partie de la paroi du corps du tube soit façonnée sous la forme d'un panneau formant organe de montage (4) muni d'un grand nombre de perforations (5) disposées dans sa direction longitudinale, de manière à laisser entre celles-ci des intervalles égaux prédéterminés et muni en outre d'une fente longitudinale (6) ménagée sur la totalité de sa longueur intérieure dans sa direction longitudinale de façon à ce qu'un panneua coulissant (7) muni d'un grand nombre d'ouvertures (8), disposées dans sa direction longitudinale de façon à laisser entre celles-ci des intervalles égaux à ceux qui sont laissés entre le grand nombre de trous (8) mentionnés précédemment, puisse être inséré de manière coulissante dans la fente (6) du panneau formant organe de montage (4) et à ce que ces trous (5) du panneua formant organe de montage (4) puissent être fermés et ouverts par le mouvement coulissant du panneau coulissant (7), et en ce que l'organe d'essuyage (9) comprend un arbre central (10) qui est mobile vers l'avant et vers l'arrière dans la direction longitudinale du tube mentionné précédemment (1), un organe annulaire (11) qui est disposé de façon à entourer l'arbre central (10) afin qu'une ouverture creuse pour le passage de liquide puisse être définie à l'intérieur de cet organe autour de l'arbre central (10), un châssis ayant (12) qui sert de support à une surface avant de l'organe annulaire (11), peut coulisser le long de l'arbre central (10) et être traversé par un liquide, un châssis arrière (13) qui sert de support à une surface arrière de l'organe annulaire (11), coulisse le long de l'arbre central (10) et peut être traversé par un liquide, et une plaque formant soupape (15) qui est fixée sur l'arbre central (10) à l'intérieur d'un espace formé entre l'organe annulaire (11) et le châssis arrière (13) de manière à ce que la plaque formant soupape (15) soit mobile vers l'avant et vers l'arrière en coordination avec le mouvement de va-et-vient vers l'avant et vers l'arrière de l'arbre central (10) pour fermer et ouvrir l'orifice creux intérieur de l'organe annulaire (11).

2. Appareil selon la revendication 1, caractérisé en ce que le panneau formant organe de montage (4) comprend un organe de montage plat qui peut être adapté à être monté dans des gorges de guidage (3) formées de part et d'autre d'une fente s'ouvrant vers l'extérieur, ménagée dans une partie de la paroi du corps du tube, et en ce que les perforations (5) présentent chacune une forme d'entonnoir présentant un diamètre croissant progressivement vers leur extrémité intérieure.

3. Appareil pour essuyer un tube d'urine selon la revendication 1, caractérisé en ce qu'au moins un tube d'urine (1) est utilisé, et que dans la cas où une pluralité de tubes d'urine (1) est utilisée, les tubes adjacents (1) sont raccordés les uns aux autres par l'intermédiaire d'un organe de raccordement de telle manière que ces organes de raccordement (19, 21, 22) sont fixés au moyen d'un agent adhésif aux surfaces extérieures de leurs parties d'extrémités mises en contact.

4. Appareil selon la revendication 1, caractérisé en ce que l'organe annulaire de l'organe d'essuyage (9) se compose d'un joint plat circulaire (11a) et d'un organe de serrage annulaire circulaire ayant une section en U (11b).

5. Appareil selon la revendication 1, caractérisé en ce que le châssis avant (12) se compose d'au moins deux bras avant (18) disposés circulairement de façon à ménager chaque espace de passage de liquide (17) entre ceux-ci autour de l'arbre central (10), et ce que les extrémités arrière de ces bras (18) sont reliées à la surface avant de l'organe annulaire (11) et en ce que leurs extrémités avant sont reliées à tube coulissant (19) monté de façon a coulisser sur l'arbre central (10).

6. Appareil selon la revendication 1, caractérisé en ce que le châssis arrière (13) se compose d'au moins deux bras arrière (21) disposés circulairement de façon à ménager chaque espace de passage de liquide (20) ente ceux-ci autour de l'arbre central (10), et d'une plaque arrière (23) qui rejoint, à sa périphérie extérieure, les extrémités arrière de ces bras arrière (21) et est montée de façon à coulisser sur l'arbre central (10) par l'intermédiaire d'un tube coulissant (22) fixé sur sa périphérie intérieure.

7. Appareil selon la revendication 1, caractérisé en ce que la plaque formant soupape (15) peut coulisser vers l'avant et vers l'arrière à l'intérieur d'un espace formé entre l'organe annulaire (11) et la plaque arrière (23).

8. Appareil selon la revendication 1, caractérisé en ce que la plaque coulissante (7) présente une partie d'extrémité de raccordement (7a) qui dépasse d'au moins une extrémité du tube d'urine (1) de façon à être raccordée à une source de mouvement de va-et-vient située à l'extérieur.

9. Appareil selon la revendication 1, caractérisé en ce que les deux extrémités de l'arbre central (10) de l'organe d'essuage (9) sont des extrémités de raccordement permettant de raccorder des câbles de traction tels qu'un fil métallique, un filin (30), etc., dont les extrémités extérieures sont fixées à une source de mouvement de va-et-vient (33) située à l'extérieur.

10. Utilisation d'un appareil selon l'une quelconque des revendications précédentes dans une étable, caractérisée en ce que le tube mentionné précédemment (1) est installé sur l'axe central d'une surface inférieure d'une fosse à déchets (27) prévue sous une rangée de caissons à bétail (26) dans une étable (24) dans des conditions telles qu'il soit légèrement incliné et que son extrémité inférieure soit située au niveau d'une canalisation d'évacuation se prolongeant vers l'extérieur e l'étable (24), et en ce que la partie d'extrémité de raccordement du panneau coulissant (7) est reliée à la source de mouvement de va-et-vient (33), l'organe d'essuyage (9) étant monté dans le tube d'urine (1) de telle manière que sa périphérie extérieure est en contact étroit avec la surface intérieure du tube d'urine (1), et les deux extrémités de l'arbre central (10) sont reliées par l'intermédiaire de câbles de traction (30) à la source de mouvement de va-et-vient (33) située à l'extérieur.

# FIG.1

# FIG.2

# FIG.3

# FIG.4

3  4
7
5  5

1  2  1

# FIG.6

# FIG.5

5
6
5
4
5

8
7b  7b
7
8

7b  7b

# FIG.7

# FIG.8

# FIG.9

# FIG.10

# FIG.11

24

25    26    28    27    29

29a    29a

# FIG.14

A    B    A

XV

D

XV

B

a

# FIG. 15

A    a    a    a    A

e

C    D    E    C

# FIG. 16

A

e

E

B

f

E

# FIG. 12

# FIG. 13

EP 0 251 101 B1